# EUROPEAN PATENT APPLICATION

(11) **EP 3 038 045 A1**
(43) Date of publication of application: **29.06.2016**
(21) Application number: 15202805.6
(22) Date of filing: 28.12.2015
(51) Int. Cl.: G06Q 30/06, G06Q 10/02, H04M 7/00, G06Q 30/02

(54) **INFORMATION PROVIDING SYSTEM**

(30) Priority: 26.12.2014 JP 2014266779
(71) Applicant: Gurunavi, Inc., Chiyoda-ku Tokyo 100-0006 (JP)
(72) Inventor: ITO, Tomonori, Chiyoda-ku, Tokyo, 100-0006 (JP)
(74) Representative: Kuhnen & Wacker

(57) **Abstract**

An information providing system (1) connectable with a user terminal (5) includes: a receiving unit (231A) that receives user identification information and a search condition from the user terminal (5); an acquisition unit (232A) that acquires search target identification information about a search target found on the basis of the search condition; a storage unit (22) that stores the search target identification information in association with the user identification information; a communication unit (3) that connects the user terminal (5) with a required communication destination (6) on the basis of a communication request from the user terminal (5); and a transmission unit (232B) that, when the required communication destination coincides with the search target identification information associated with the user identification information of the user terminal, transmits, to the user terminal (5), information about the search target corresponding to the search target identification information.

## Description

### BACKGROUND OF THE INVENTION

### 1. Field of the Invention

The invention relates to an information providing system.

### 2. Description of Related Art

In recent years, shops, such as restaurants, usually provide information on websites. In such a situation, there is a website that provides information about various shops for a certain business category by signing a contract with the shops. On such a website, a user is allowed to search for shops that coincide with a desired condition and then browse information about a shop included in the found results, and is also allowed to directly make a call to a shop, which the user wants to reserve, through a corresponding browsing page.

A user who made a call to a shop for reservation, or the like, may need information about the shop, such as the menu and location of the shop, after the call. There is known, for example, an information providing system described in Japanese Patent Application Publication No. 2008-22497 (JP 2008-22497 A) as a system by which, after a call, shop information is automatically provided to a user. JP 2008-22497 A describes the information providing system that detects a phone call between users and that provides a source of telephone communication with information associated with destination information by a communication environment and an information type based on source information.

### SUMMARY OF THE INVENTION

However, in the system that provides a source with information associated with destination information only on the condition that telephone communication between users has been detected, not only information needed by a user but also unnecessary information is also provided to the user, so it is burdensome for the user.

The invention provides an information providing system that is able to provide highly necessary information for a user.

An aspect of the invention provides an information providing system. The information providing system is connectable with a user terminal. The information providing system includes: a receiving unit that receives user identification information and a search condition from the user terminal; an acquisition unit that acquires search target identification information related to a search target found on the basis of the search condition; a storage unit that stores the search target identification information in association with the user identification information; a communication unit that connects the user terminal with a required communication destination on the basis of a communication request from the user terminal; and a transmission unit that, when the required communication destination coincides with the search target identification information associated with the user identification information of the user terminal, transmits, to the user terminal, information about the search target corresponding to the search target identification information.

In the information providing system according to the aspect of the invention, the communication unit may connect the user terminal with the required communication destination so as to be communicable by voice.

In the information providing system according to the aspect of the invention, when a duration of communication between the user terminal and the required communication destination is longer than a predetermined time, the transmission unit may transmit, to the user terminal, the information about the search target corresponding to the search target identification information.

In the information providing system according to the aspect of the invention, the communication unit may include a communication analyzing unit that analyzes details of communication between the user terminal and the required communication destination, and the transmission unit may transmit, to the user terminal, the information about the search target corresponding to the search target identification information depending on the details of communication, analyzed by the communication analyzing unit.

In the information providing system according to the aspect of the invention, the user terminal may include a display unit that displays a search result on the search target found on the basis of the search condition, and the communication unit may connect the user terminal with the required communication destination only when a user performs a predetermined operation on the search result displayed by the display unit.

In the information providing system according to the aspect of the invention, the storage unit may store a user selected category in association with the user identification information and store a search target category in association with the search target identification information, and, when the user selected category coincides with the search target category, the transmission unit may transmit, to the user terminal, the information about the search target corresponding to the search target identification information.

In the information providing system according to the aspect of the invention, the search target may be a shop, and the search target category may be restaurant.

In the information providing system according to the aspect of the invention, the transmission unit may transmit, to the user terminal, the information about the search target corresponding to the search target identification information with the use of an SMS, an e-mail or a chat application.

In the information providing system according to the aspect of the invention, the information about the search target corresponding to the search target identification information may include at least one of a name, image, phone number, address, business hours, directions and map information of the search target.

In the information providing system according to the aspect of the invention, the information about the search target corresponding to the search target identification information may further include at least one of a vacant seat situation for each day, a vacant seat situation for each time period and a shortcut to a reservation page of the search target.

In the information providing system according to the aspect of the invention, when the required communication destination is included in a user's browsing history, the transmission unit may transmit, to the user terminal, the information about the search target corresponding to the search target identification information.

The information providing system according to the aspect of the invention may further include an information processing unit that changes distribution items and layout of the information about the search target corresponding to the search target identification information, and the information processing unit may change the items and layout depending on details of a user's browsing history by consulting the browsing history.

In the information providing system according to the aspect of the invention, the information processing unit may preferentially incorporate information, which is not browsed by the user, into the distribution items of the information about the search target corresponding to the search target identification information.

According to the aspect of the invention, it is possible to provide highly necessary information for a user to a user terminal.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view that shows an example of application of an information providing system according to the invention;
FIG. 2 is a view that shows an example of the schematic configuration of a call forwarding server;
FIG. 3 is a view that shows an example of the schematic configuration of a mobile terminal;
FIG. 4 is a view that shows an example of the data structure of a user information table;
FIG. 5 is a view that shows an example of the data structure of a call forwarding table;
FIG. 6 is a view that shows an example of the data structure of a shop information table;
FIG. 7 is a view that shows an example of the data structure of a distribution condition table;
FIG. 8 is a view that shows an example of the data structure of a search history table;
FIG. 9 is a view that shows an example of the data structure of a browsing history table;
FIG. 10 is a view that shows an example of the data structure of a call history table;
FIG. 11 is a view that shows an example of the flow of a process regarding a search for a shop and a browse of a shop page;
FIG. 12 is a view that shows an example of the flow of a process regarding a call and distribution of reminding information;
FIG. 13 is a view that shows an example of the flow of a reminding information data extracting process;
FIG. 14A is a view that shows an example of a search condition input screen;
FIG. 14B is a view that shows an example of a search result screen;
FIG. 14C is a view that shows an example of a shop page screen;
FIG. 14D is a view that shows an example of a call screen;
FIG. 14E is a view that shows an example of a reminding information screen;
FIG. 15 is a view that shows an example of the schematic configuration of a call forwarding server;
FIG. 16 is a view that shows an example of the data structure of a call forwarding table;
FIG. 17 is a view that shows an example of the data structure of a call history table;
FIG. 18 is a view that shows an example of the flow of a process regarding a call and distribution of reminding information; and
FIG. 19 is a view that shows an example of the flow of a reminding information data extracting process.

### DETAILED DESCRIPTION OF EMBODIMENTS

Hereinafter, various embodiments of the invention will be described in detail with reference to the accompanying drawings. However, it should be noted that the technical scope of the invention is not limited to those embodiments but it encompasses the inventions recited in the appended claims and equivalents thereof.

### First Embodiment

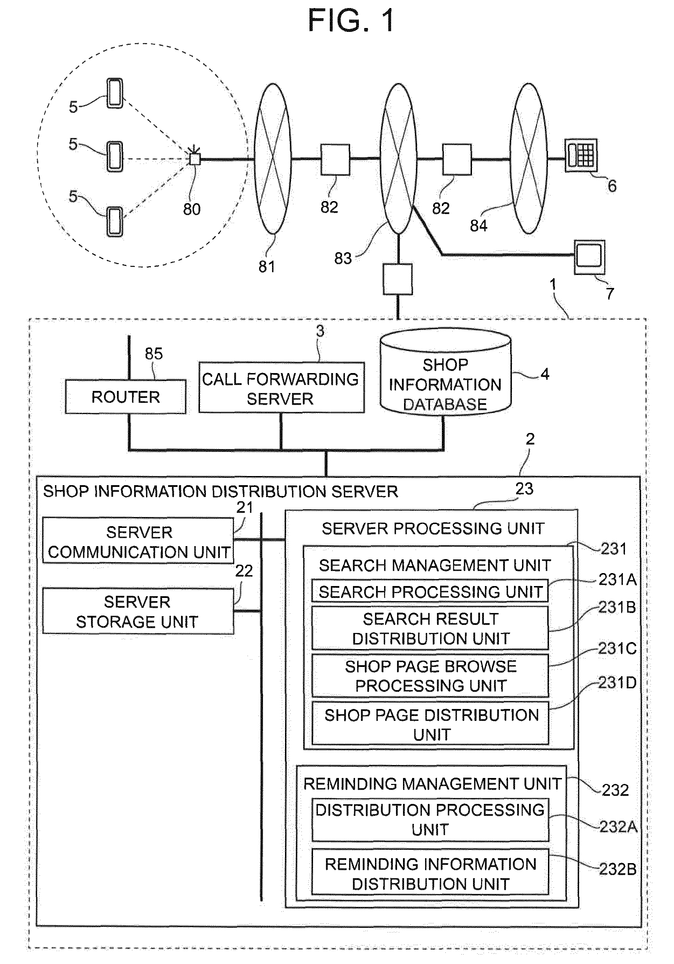

FIG. 1 is a view that shows an example of application of an information providing system 1 according to the invention.

The information providing system 1, mobile terminals 5, a shop telephone 6 and a shop terminal 7 are connected to one another via a communication network, and are, for example, connected to one another via a base station 80, a mobile communication network 81, gateways 82, the Internet 83 and a telephone communication network 84.

The information providing system 1 is formed of a call forwarding server 3, a shop information distribution server 2, a shop information database 4 and a router 85 such that the call forwarding server 3, the shop information distribution server 2, the shop information database 4 and the router 85 are communicable with one another. The call forwarding server 3, the shop information distribution server 2 and the shop information database 4 are connected to the Internet 83 via the router 85 (see FIG. 1).

The shop information distribution server 2 executes the process of searching for a shop, the process of browsing a shop page and the process of distributing reminding information in response to a request from each of the mobile terminals 5. For this purpose, the shop information distribution server 2 includes a server communication unit 21, a server storage unit 22 and a server processing unit 23.

The server communication unit 21 includes a communication interface circuit for connecting the shop information distribution server 2 to an external device, and carries out communication with the external device. The server communication unit 21 supplies the server processing unit 23 with data received from the call forwarding server 3, the shop information database 4, any one of the mobile terminals 5, the shop telephone 6, the shop terminal 7, or the like. The server communication unit 21 transmits data, supplied from the server processing unit 23, to the call forwarding server 3, the shop information database 4, any one of the mobile terminals 5, or the like.

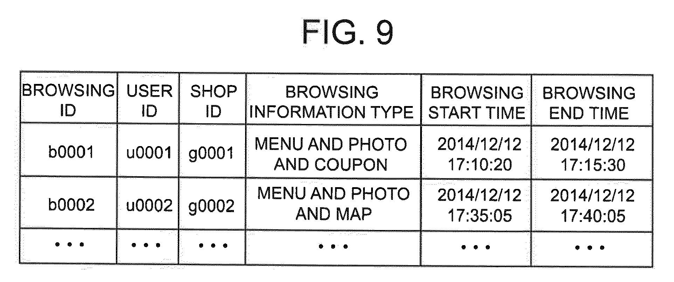

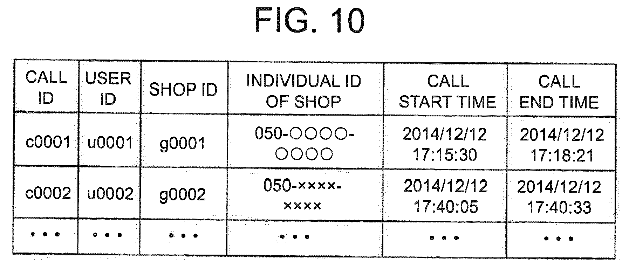

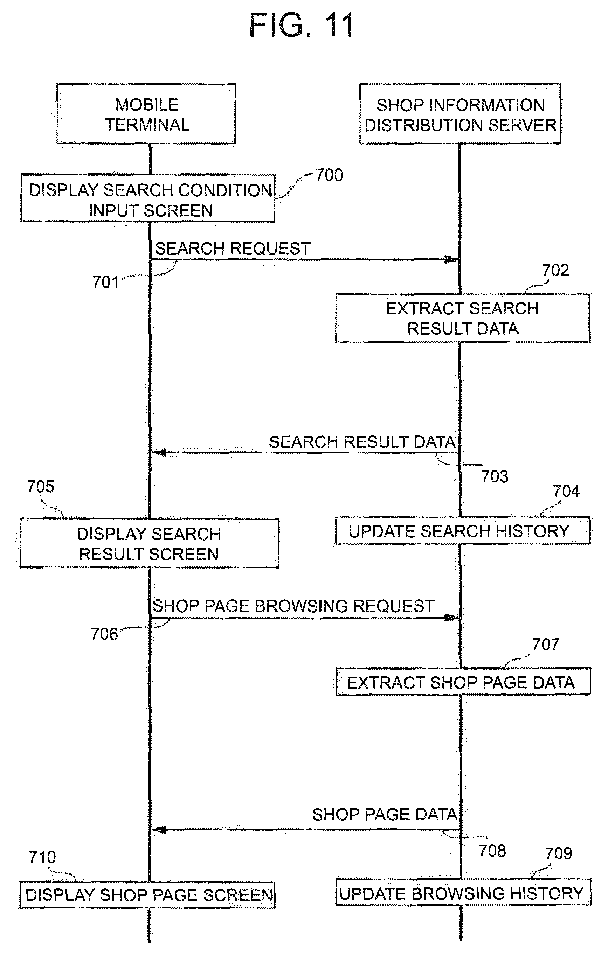

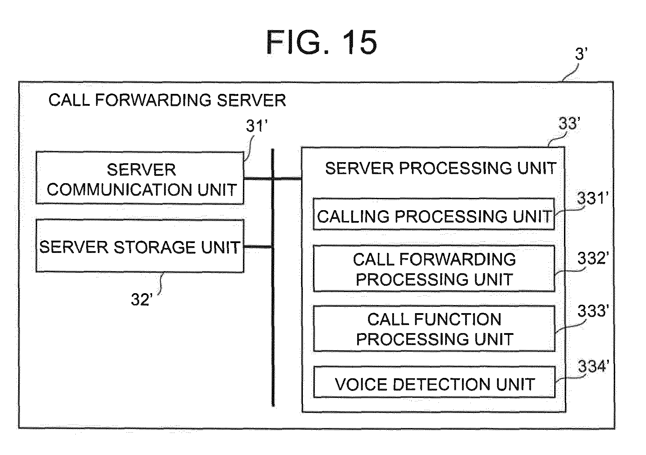

The server storage unit 22, for example, includes at least any one of a magnetic tape, a magnetic disk drive and an optical disk drive. The server storage unit 22 stores an operating system program, driver programs, application programs, data, and the like, which are used in processes in the server processing unit 23. The server storage unit 22 stores a distribution condition table (FIG. 9), a search history table (FIG. 10), a browsing history table (FIG. 11), data (FIG. 15) of a reminding information screen, and the like, as data. Distribution conditions for reminding information are managed by the use of the distribution condition table. A history of searches for shops is managed by the use of the search history table. A history of browses of shop pages is managed by the use of the browsing history table.

The server processing unit 23 includes one or multiple processors and their peripheral circuits. The server processing unit 23 comprehensively controls the general operation of the shop information distribution server 2, and is, for example, a central processing unit (CPU). The server processing unit 23 controls the operations of the server communication unit 21, and the like, such that various processes of the shop information distribution server 2 are executed in appropriate procedure in response to programs stored in the server storage unit 22, and the like. The server processing unit 23 executes a process on the basis of the programs (the operating system program, the driver programs, the application programs, and the like) stored in the server storage unit 22. The server processing unit 23 is able to execute a plurality of programs (the application programs, and the like) in parallel with each other.

The server processing unit 23 includes a search management unit 231 and a reminding management unit 232. The search management unit 231 mainly executes the process of searching for a shop and the process of browsing a shop page. The reminding management unit 232 mainly executes the process of distributing reminding information.

The search management unit 231 includes a search processing unit 231A, a search result distribution unit 231B, a shop page browse processing unit 231C and a shop page distribution unit 231D. These units are functional modules that are implemented by programs that are executed by the one or multiple processors of the server processing unit 23. Alternatively, these units may be implemented in the shop information distribution server 2 as firmware.

The search processing unit 231A receives a search request, including a user ID, a search condition, and the like, from the mobile terminal 5, consults a shop information table stored in the shop information database 4, and then extracts search result data that coincide with the search condition. The search processing unit 231A further updates the search history table stored in the server storage unit 22, and records various pieces of information regarding searches. The search result distribution unit 231 B distributes search result data to the mobile terminal 5.

The shop page browse processing unit 231C consults the shop information table stored in the shop information database 4 via the server communication unit 21, and then extracts desired shop page data. The shop page browse processing unit 231C further updates the browsing history table stored in the server storage unit 22, and records various pieces of information regarding browses. The shop page distribution unit 231 D distributes shop page data to the mobile terminal 5.

The reminding management unit 232 includes a distribution processing unit 232A and a reminding information distribution unit 232B. These units are functional modules that are implemented by programs that are executed by the one or multiple processors of the server processing unit 23. Alternatively, these units may be implemented in the shop information distribution server 2 as firmware.

The distribution processing unit 232A executes the process of determining whether a distribution condition for reminding information is satisfied. The distribution processing unit 232A consults the shop information table, and extracts the reminding information data of a shop regarding a shop ID. The distribution processing unit 232A stores the reminding information data in the server storage unit 22. The reminding information distribution unit 232B transmits the reminding information data to the mobile terminal 5.

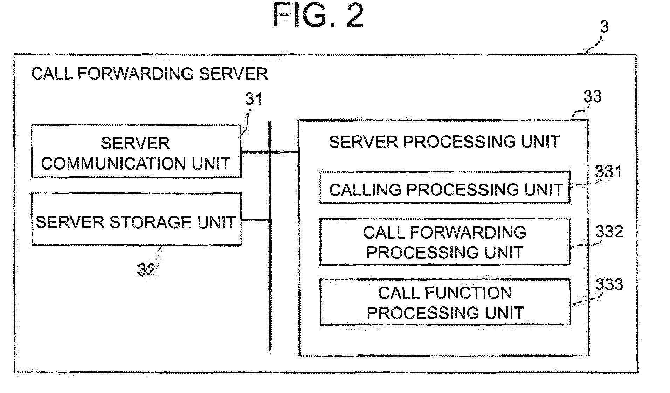

FIG. 2 is a view that shows an example of the schematic configuration of the call forwarding server 3.

The call forwarding server 3 executes a call process between the mobile terminal 5 and the shop telephone 6 in response to a request from the mobile terminal 5. For this purpose, the call forwarding server 3 includes the server communication unit 31, the server storage unit 32 and the server processing unit 33. The call forwarding server 3 is an example of a communication unit of the information providing system.

The server communication unit 31 includes a communication interface circuit for connecting the call forwarding server 3 to an external device, and carries out communication with the external device. The server communication unit 31 supplies the server processing unit 33 with data received from the shop information distribution server 2, the shop information database 4, any one of the mobile terminals 5, the shop telephone 6, the shop terminal 7, or the like. The server communication unit 31 transmits data, supplied from the server processing unit 33, to the shop information distribution server 2, the shop information database 4, any one of the mobile terminals 5, or the like.

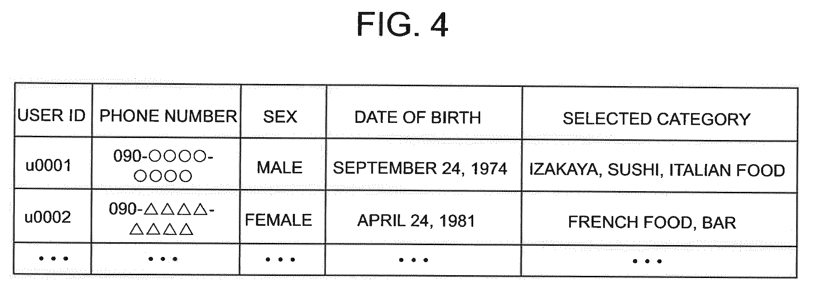

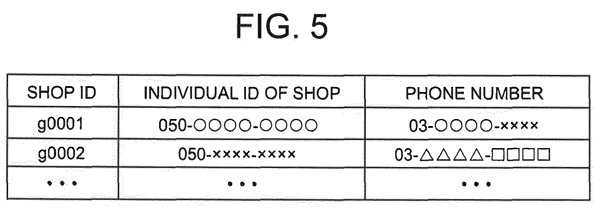

The server storage unit 32, for example, includes at least any one of a magnetic tape, a magnetic disk drive and an optical disk drive. The server storage unit 32 stores an operating system program, driver programs, application programs, data, and the like, which are used in processes in the server processing unit 33. The server storage unit 32 stores a user information table (FIG. 4), a call forwarding table (FIG. 5), a call history table (FIG. 10), and the like, as data. Information about users is managed by the use of the user information table (FIG. 4). Individual IDs, and the like, of shops for the call process are managed by the use of the call forwarding table. A call history is managed by the use of the call history table.

The server processing unit 33 includes one or multiple processors and their peripheral circuits. The server processing unit 33 comprehensively controls the general operation of the call forwarding server 3, and is, for example, a CPU. The server processing unit 33 controls the operations of the server communication unit 31, and the like, such that various processes of the call forwarding server 3 are executed in appropriate procedure in response to programs stored in the server storage unit 32, and the like. The server processing unit 33 executes a process on the basis of the programs (the operating system program, the driver programs, the application programs, and the like) stored in the server storage unit 32. The server processing unit 33 is able to execute a plurality of programs (the application programs, and the like) in parallel with each other.

The server processing unit 33 includes a calling processing unit 331, a call forwarding processing unit 332 and a call function processing unit 333. These units are functional modules that are implemented by programs that are executed by the one or multiple processors of the server processing unit 33. Alternatively, these units may be implemented in the call forwarding server 3 as firmware.

When a user browses information about a shop through an application program launched in the mobile terminal 5 and then desires to make a call, the calling processing unit 331 receives a call request, including various pieces of identification information, such as a user ID and a shop ID, from the mobile terminal 5. The calling processing unit 331 identifies a shop that is a call destination on the basis of the received various pieces of identification information, and then extracts the individual ID assigned to the identified shop by consulting a call forwarding table stored in the server storage unit 32. The calling processing unit 331 establishes a line for internet telephone between the mobile terminal 5 and the call forwarding server 3 on the basis of the extracted individual ID.

The call forwarding processing unit 332 extracts the phone number of the shop, stored in the server storage unit 32, and establishes a telephone line between the mobile terminal 5 and the shop telephone 6 by forwarding the internet telephone established between the mobile terminal 5 and the call forwarding server 3 to the phone number of the shop. An SIP server is an example of the call forwarding processing unit 332; however, the call forwarding processing unit 332 is not limited to the SIP server.

The call function processing unit 333 monitors the status of call between the mobile terminal 5 and the shop telephone 6 and, when the call is ended (when the telephone line is disconnected), detects the termination of the call (the disconnection of the telephone line). The call function processing unit 333 transmits call information, such as the user ID, the shop ID, the individual ID of the shop, call start time and call end time, to the server storage unit 32, and updates a call history table stored in the server storage unit 32. The call function processing unit 333 further transmits the call information to the shop information distribution server 2.

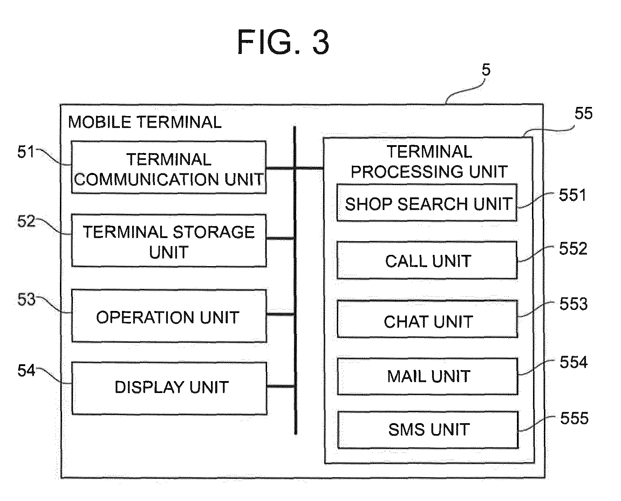

FIG. 3 is a view that shows an example of the schematic configuration of each mobile terminal 5.

The mobile terminal 5 establishes connection with the information providing system 1 via the base station 80, the mobile communication network 81, the gateway 82 and the Internet 83, and carries out communication with the information providing system 1. The mobile terminal 5 establishes connection with the shop telephone 6 via the base station 80, the mobile communication network 81, the gateways 82, the Internet 83 and the telephone communication network 84, and carries out communication with the shop telephone 6. The mobile terminal 5 includes a terminal communication unit 51, a terminal storage unit 52, an operation unit 53, a display unit 54 and a terminal processing unit 55.

In the present embodiment, a multifunctional mobile phone (so-called smartphone) is assumed as the mobile terminal 5; however, the invention is not limited to the multifunctional mobile phone. The mobile terminal 5 may be any terminal as long as the invention is applicable. For example, the mobile terminal 5 may be a mobile phone (so-called feature phone), a mobile information terminal (personal digital assistant (PDA)), a portable game machine, a portable music player, a tablet PC, or the like.

The terminal communication unit 51 includes a communication interface circuit, including an antenna having a predetermined frequency band as a sensitive band, and connects the mobile terminal 5 to a wireless communication network. The terminal communication unit 51 establishes a wireless signal line of a wideband code division multiple access (WCDMA) (registered trademark) system, or the like, with the base station 80 via a channel allocated by the base station 80, and carries out communication with the base station 80. The terminal communication unit 51 transmits data, supplied from the terminal processing unit 55, to the shop information distribution server 2, the call forwarding server 3, and the like. The terminal communication unit 51 supplies the terminal processing unit 55 with data received from the shop information distribution server 2, the call forwarding server 3, and the like.

The terminal storage unit 52, for example, includes at least any one of a semiconductor memory, a magnetic disk drive and an optical disk drive. The terminal storage unit 52 stores an operating system program, driver programs, application programs, data, and the like, which are used in processes in the terminal processing unit 55. For example, the terminal storage unit 52 stores an input device driver program, an output device driver program, and the like, as the driver programs. The operation unit 53 is controlled in accordance with the input device driver program. The display unit 54 is controlled in accordance with the output device driver program. The terminal storage unit 52 stores a program, and the like, for acquiring and displaying display data regarding the progress of a game as an application program. The terminal storage unit 52 stores display data, video data, image data, and the like, regarding the progress of a game as data. The terminal storage unit 52 may temporarily store temporal data regarding a predetermined process.

The operation unit 53 may be any device as long as the device is able to operate the mobile terminal 5. The operation unit 53 is, for example, a touch pad, a keyboard, or the like. A user is allowed to input characters, numerals, and the like, with the use of the operation unit 53. When the operation unit 53 is operated by a user, the operation unit 53 generates a signal corresponding to that operation. The generated signal is supplied to the terminal processing unit 55 as a user's command.

The display unit 54 may also be any device as long as the device is able to display a video, an image, and the like. For example, the display unit 54 is a liquid crystal display, an organic electro-luminescence (EL) display, or the like. The display unit 54 displays a video based on video data supplied from the terminal processing unit 55, an image based on image data supplied from the terminal processing unit 55, or the like.

The terminal processing unit 55 includes one or multiple processors and their peripheral circuits. The terminal processing unit 55 comprehensively controls the general operation of the mobile terminal 5, and is, for example, a CPU. The terminal processing unit 55 controls the operations of the terminal communication unit 51, display unit 54, and the like, such that various processes of the mobile terminal 5 are executed in appropriate procedure in response to programs stored in the terminal storage unit 52, an operation to the operation unit 53, and the like. The terminal processing unit 55 executes a process on the basis of the programs (the operating system program, the driver programs, the application programs, and the like) stored in the terminal storage unit 52. The terminal processing unit 55 is able to execute a plurality of programs (the application programs, and the like) in parallel with each other.

The terminal processing unit 55 includes a shop search unit 551, a call unit 552, a chat unit 553, a mail unit 554, an SMS unit 555, and the like. The shop search unit 551, the call unit 552, the chat unit 553, the mail unit 554 and the SMS unit 555 are functional modules that are implemented by programs that are executed by the one or multiple processors of the terminal processing unit 55. Alternatively, the shop search unit 551, the call unit 552, the chat unit 553, the mail unit 554 and the SMS unit 555 may be implemented in the mobile terminal 5 as firmware.

The shop search unit 551 acquires and displays data regarding a shop search and data regarding a shop page. That is, the shop search unit 551 displays a search condition input screen on the display unit 54 on the basis of the display data stored in the terminal storage unit 52. The shop search unit 551 transmits a search request, including information about a user ID, a search condition, and the like, to the shop information distribution server 2 via the terminal communication unit 51. The shop search unit 551 displays a search result screen on the display unit 54 on the basis of the received search result data. The shop search unit 551 transmits a shop page browsing request, including a shop ID, and the like, to the shop information distribution server 2 via the terminal communication unit 51. The shop search unit 551 displays a shop page screen on the display unit 54 on the basis of received shop page data.

The call unit 552, for example, transmits or receives signals and data regarding a call. For example, when a user chooses to make a call to a shop on the shop page displayed on the display unit 54, the call unit 552 transmits a call request, including a user ID, a shop ID, and the like, to the call forwarding server 3. When a user chooses to make a call on a default phone call application implemented in the mobile terminal 5, the call unit 552 transmits a call request to the call forwarding server 3.

The chat unit 553 acquires and displays data regarding a chat application (an application program for having a character-based conversation in real time) implemented in the mobile terminal 5.

The mail unit 554, for example, acquires and displays data regarding an e-mail application implemented in the mobile terminal 5.

The SMS unit 555, for example, acquires and displays data regarding an SMS (short message service) application implemented in the mobile terminal 5.

FIG. 4 is a view that shows an example of the data structure of a user information table.

The user information table is, for example, stored in the server storage unit 32 of the call forwarding server 3. The user information table stores the identifier (ID), phone number, sex, date of birth, selected category, and the like, of each user. The selected category is the category of a shop, which is allowed to be set arbitrarily by a user by, for example, selecting one from among predetermined items. The selected category, for example, includes restaurant. Restaurant may be further classified into Japanese food, sushi, grilled meat, Italian food, French food, all-you-can-eat buffet, curry, Chinese food, ramen, bar, cafe, family restaurant, and the like. Other than the above, the selected category may further include a category of shops that need reservation, such as hairdresser, hospital, massage parlor, movie theater and karaoke studio. The selected category is, for example, used to determine whether to distribute reminding information (described later).

FIG. 5 is a view that shows an example of the data structure of the call forwarding table.

The call forwarding table is, for example, stored in the server storage unit 32 of the call forwarding server 3. In the call forwarding table, a shop ID, an individual ID for making a call to a shop by internet telephone, for example, an internet telephone number allocated to the shop, and a phone number of the shop are associated with one another. The internet telephone number is a phone number that begins with 050. Not an internet telephone number but any information that can uniquely identify a shop may be used as an individual ID.

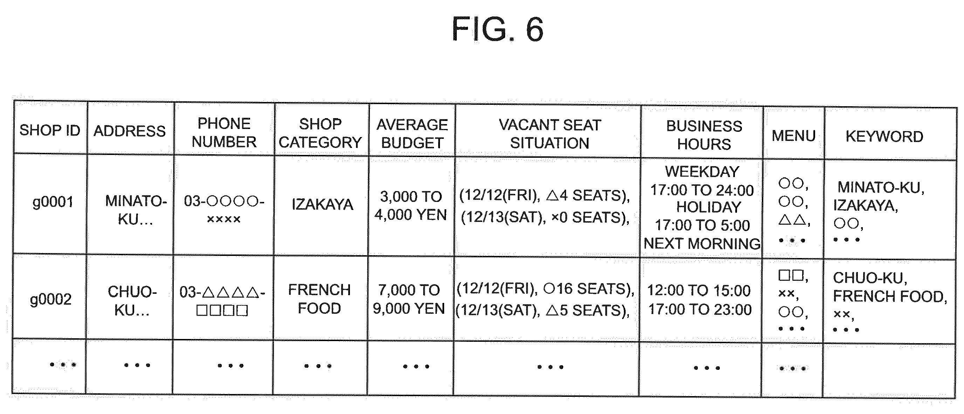

FIG. 6 is a view that shows an example of the data structure of the shop information table.

The shop information table is, for example, stored in the shop information database 4. The shop information table stores the ID, address, phone number, shop category, average budget, vacant seat situation, business hours, menu, and the like, of each shop. The shop category, for example, includes restaurant. Restaurant may be further classified into Japanese food, sushi, grilled meat, Italian food, French food, all-you-can-eat buffet, curry, Chinese food, ramen, bar, cafe, family restaurant, and the like. Other than the above, the shop category may further include a category of shops that need reservation, such as hairdresser, hospital, massage parlor, movie theater and karaoke studio.

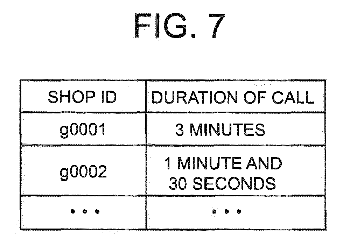

FIG. 7 is a view that shows an example of the data structure of the distribution condition table.

The distribution condition table is, for example, stored in the server storage unit 22 of the shop information distribution server 2. The distribution condition table stores the ID, shortest duration of a call, and the like, of each shop.

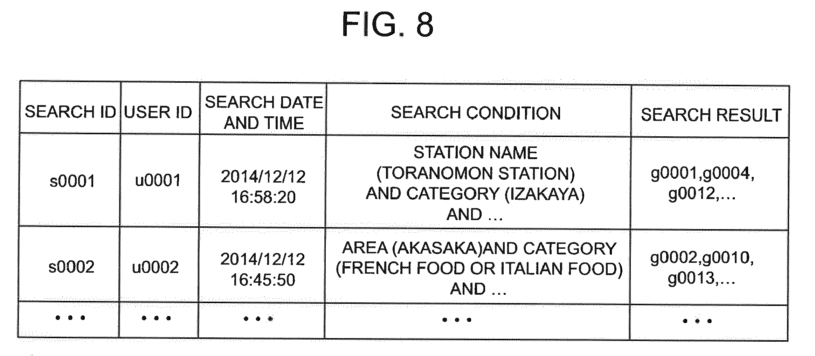

FIG. 8 is a view that shows an example of the data structure of the search history table.

The search history table is, for example, stored in the server storage unit 22 of the shop information distribution server 2. In the search history table, various pieces of information regarding a search, such as a user ID, search date and time, search condition, search result, and the like, are associated with a search ID allocated to each search. The search result is a set of shop IDs of shops that coincide with the search condition.

FIG. 9 is a view that shows an example of the data structure of the browsing history table.

The browsing history table is, for example, stored in the server storage unit 22 of the shop information distribution server 2. In the browsing history table, various pieces of information regarding a browse, such as a user ID, a shop ID, a browsing information type, browsing start time and browsing end time, are associated with a browsing ID allocated to each browse of a shop page.

FIG. 10 is a view that shows an example of the data structure of the call history table.

The call history table is, for example, stored in the server storage unit 22 of the shop information distribution server 2. In the call history table, various pieces of information regarding a call, such as a user ID, a shop ID, an individual ID of a shop, call start time and call end time, are associated with a call ID allocated to each call between a user and a shop.

FIG. 11 is a view that shows an example of the flow of a process regarding a search for a shop and a browse of a shop page.

The flowchart that will be described below is executed mainly by the elements of the shop information distribution server 2, shop information database 4 and mobile terminal 5 in cooperation with one another on the basis of programs prestored in the shop information distribution server 2, the shop information database 4 and the mobile terminal 5.

Initially, the shop search unit 551 of the mobile terminal 5 displays the search condition input screen on the display unit 54 on the basis of the display data stored in the terminal storage unit 52 (step S700). The search condition input screen is a screen for allowing a user to input a search condition through a method, such as inputting a keyword and selecting an item. The search condition input screen will be described in detail later.

When the user inputs a search condition on the search condition input screen and provides instructions to execute searching, the shop search unit 551 of the mobile terminal 5 transmits a search request including information, such as the user ID and the search condition, to the shop information distribution server 2 via the terminal communication unit 51 (step S701).

When the search request has been received via the server communication unit 21, the search processing unit 231A of the shop information distribution server 2 extracts search result data including the shop IDs, and the like, of shops that coincide with the search condition by consulting the shop information table stored in the shop information database 4 (step S702). When the search result data have been received via the server communication unit 21, the search result distribution unit 231B of the shop information distribution server 2 distributes the search result data to the mobile terminal 5 (step S703). Subsequently, the search processing unit 231A updates the search history table stored in the server storage unit 22, and records various pieces of information regarding the search as search target identification information (step S704).

When the search result data have been received via the terminal communication unit 51, the shop search unit 551 of the mobile terminal 5 displays a search result screen on the display unit 54 on the basis of the received search result data (step S705). The search result screen is a screen that shows shops that coincide with the search condition. The search result screen will be described in detail later.

Subsequently, when the user chooses to browse a specific shop page on the search result screen displayed on the display unit 54, the shop search unit 551 of the mobile terminal 5 transmits a shop page browsing request including the shop ID, and the like, to the shop information distribution server 2 via the terminal communication unit 51 (step S706).

When the shop page browsing request has been received via the server communication unit 21, the shop page browse processing unit 231C of the shop information distribution server 2 extracts desired shop page data by consulting the shop information table stored in the shop information database 4 via the server communication unit 21 (step S707). When the shop page data have been extracted via the server communication unit 21, the shop page distribution unit 231D of the shop information distribution server 2 distributes the shop page data to the mobile terminal 5 (step S708). Subsequently, the shop page browse processing unit 231C updates the browsing history table stored in the server storage unit 22, and records various pieces of information regarding the browse (step S709).

In step S704, various pieces of information regarding the search are recorded as the search target identification information. However, in step S709, various pieces of information regarding the browse of information included in the search results (including not only information included in the search results themselves but also information that is displayed through the search result screen, such as a shop page) may be recorded as the search target identification information. User's taste and interest often appear more strongly in various pieces of information regarding a browse of information included in search results than various pieces of information regarding a search. Therefore, when various pieces of information regarding a browse of information included in search results are recorded as the search target identification information, the accuracy of user's necessity of information that is transmitted to the user terminal improves.

When the shop page data have been received via the terminal communication unit 51, the shop search unit 551 of the mobile terminal 5 displays the shop page screen on the display unit 54 on the basis of the received shop page data (step S710). The shop page screen is a screen that shows the basic information of a shop. For example, not only basic information regarding a shop, such as the name, address and map of the shop, but also an icon for choosing to make a call to the shop, and the like, are displayed on the shop page screen. The shop page screen will be described in detail later. Thus, the process regarding a search for a shop and a browse of a shop by the information providing system 1 ends.

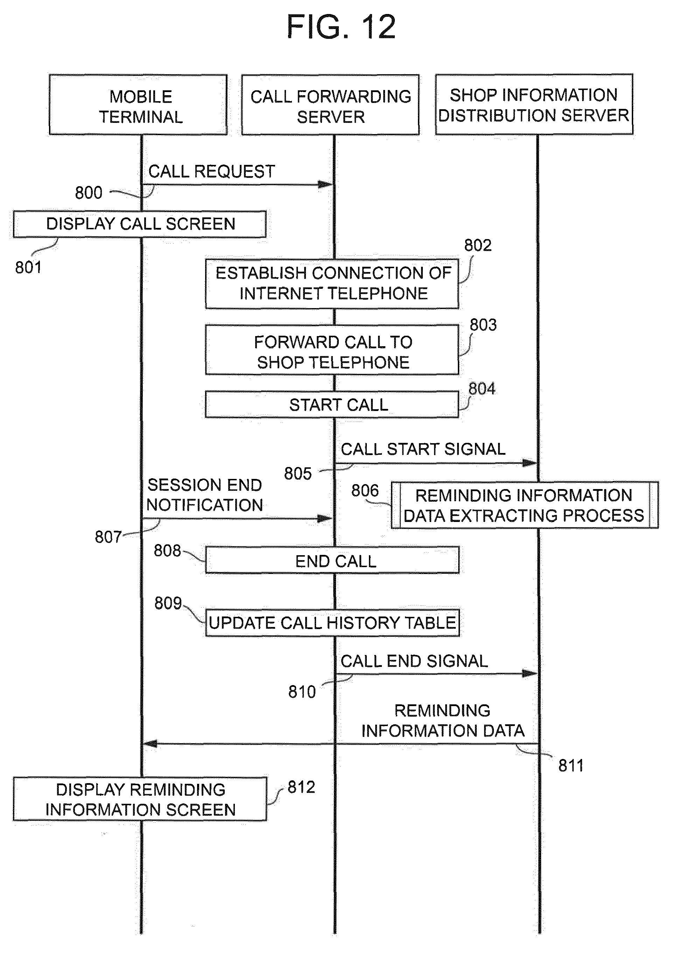

FIG. 12 is a view that shows an example of the flow of a process regarding a call and distribution of reminding information.

The flowchart that will be described below is executed mainly by the elements of the shop information distribution server 2, call forwarding server 3, shop information database 4 and mobile terminal 5 in cooperation with one another on the basis of programs prestored in the shop information distribution server 2, the call forwarding server 3, the shop information database 4 and the mobile terminal 5.

When the user chooses to make a call to a shop on a shop page displayed on the display unit 54, the call unit 552 of the mobile terminal 5 transmits a call request including the user ID, the shop ID, and the like, to the call forwarding server 3 (step S800). Subsequently, the call unit 552 displays a call screen on the display unit 54 (step S801). The call screen is a screen that indicates that the user is making a call to a shop. For example, the individual ID, and the like, of the shop are displayed on the call screen. The call screen will be described in detail later.

When the call request has been received via the server communication unit 31, the calling processing unit 331 of the call forwarding server 3 extracts the individual ID of the call destination shop by consulting the call forwarding table, and establishes connection of internet telephone between the mobile terminal 5 and the call forwarding server 3 (step S802). Subsequently, the call forwarding processing unit 332 of the call forwarding server 3 extracts the call number of the shop from the call forwarding table, and establishes a telephone line between the mobile terminal 5 and the shop telephone 6 by forwarding internet telephone to the phone number of the shop (step S803).

When the telephone line has been established, a call is started between the mobile terminal 5 and the shop telephone 6 (step S804). When the call has been started, the call function processing unit 333 transmits a call start signal including the user ID as source information, the shop ID as destination information, and the like, to the shop information distribution server 2 (step S805). When the call start signal has been received via the server communication unit 21, the reminding management unit 232 of the shop information distribution server 2 executes reminding information data extracting process (step S806). The reminding information data extracting process will be described later.

When the user chooses to end the call on the call screen, the call unit 552 of the mobile terminal 5 transmits session end notification to the call forwarding server 3 (step S807). There is a case where the shop telephone 6 transmits session end notification to the call forwarding server 3. In this case, step S807 is not executed.

When the session end notification has been received via the server communication unit 31, the call function processing unit 333 executes the process of ending the call (step S808). When the call has been ended, the call function processing unit 333 updates the call history table stored in the server storage unit 32, and records various pieces of information regarding the call (step S809). Just after the telephone line between the mobile terminal 5 and the shop telephone 6 has been established (step S804) as described above, the call history table may be updated, and various pieces of call information except information regarding the end of the call (call end time, and the like) may be recorded. In this case, when the call history table is updated in step S809, only information regarding the end of the call or various pieces of call information including information regarding the end of the call is recorded.

Subsequently, the call function processing unit 333 transmits a call end signal including the user ID as source information, the shop ID as destination information, and the like, to the shop information distribution server 2 (step S810). When the call end signal has been received via the server communication unit 21, the reminding information distribution unit 232B transmits reminding information data to the mobile terminal 5 as information regarding a search target corresponding to the search target identification information via the server communication unit 21 (step S811). At this time, the reminding information data may be any one of data to be displayed by the chat unit 553 of the mobile terminal 5, data to be displayed by the mail unit 554, and data to be displayed by the SMS unit 555. In step S902 of the reminding information data extracting process (described later), when the reminding information data are not stored in the server storage unit 22, the reminding information data are, of course, not transmitted to the mobile terminal 5 in step S811.

When the reminding information data have been received via the terminal communication unit 51, for example, the chat unit 553 of the mobile terminal 5 displays the reminding information screen on the display unit 54 on the basis of the received reminding information data (step S812). However, depending on the type of reminding information data, the mail unit 554 of the mobile terminal 5 may display the reminding information screen on the display unit 54. Alternatively, depending on the type of reminding information data, the SMS unit 555 of the mobile terminal 5 may display the reminding information screen on the display unit 54. The reminding information screen is a screen that shows the basic information of a shop. For example, basic information regarding a shop, such as the name of the shop, directions to the shop and a map, is displayed on the reminding information screen. The reminding information screen will be described in detail later. Thus, the process regarding a call and distribution of reminding information by the information providing system 1 ends.

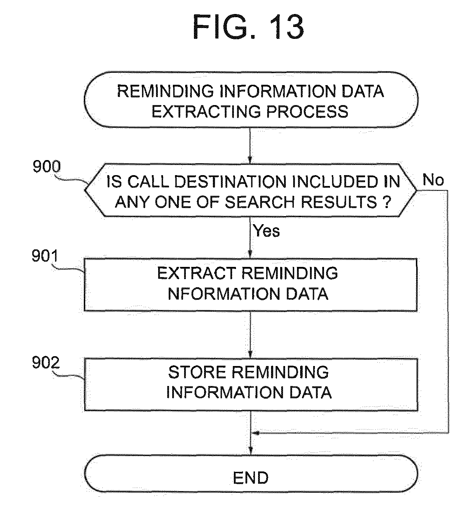

FIG. 13 is a view that shows an example of the flow of the reminding information data extracting process.

When the reminding information data extracting process starts, the distribution processing unit 232A of the shop information distribution server 2 executes the following determination process (step S900). That is, the distribution processing unit 232A extracts search IDs regarding searches on which matching process is not complete and which include the same user ID as the source user ID included in the call start signal received in step S805 by consulting the search history table. Subsequently, the distribution processing unit 232A determines whether the destination shop ID included in the call start signal received in step S805 is included in any one of the search results regarding the extracted search IDs.

When the destination shop ID included in the call start signal received in step S805 is included in none of the search results of the extracted search IDs (N in step S900), the reminding information data extracting process ends.

On the other hand, when the destination shop ID included in the call start signal received in step S805 is included in any one of the search results of the extracted search IDs (Y in step S900), the process proceeds to step S901. In step S901, the distribution processing unit 232A extracts the reminding information data of the shop regarding the destination shop ID by consulting the shop information table stored in the shop information database 4 via the server communication unit 21 (step S901).

When the reminding information data have been received via the server communication unit 21, the distribution processing unit 232A of the shop information distribution server 2 stores the reminding information data in the server storage unit 22 (step S902). Thus, the reminding information data extracting process ends.

As described above, in the information providing system 1, the reminding information data extracting process is executed in response to the call start signal (step S806), and the reminding information data are transmitted in response to the call end signal (step S811). Therefore, the user is allowed to acquire reminding information as soon as the user ends a call for reservation, or the like, so it is possible to provide reminding information to the user at appropriate timing.

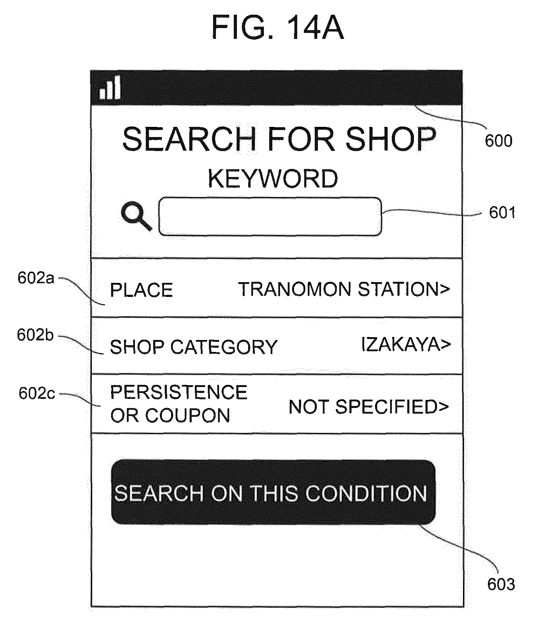

Next, examples of display screens of the mobile terminal 5 will be described with reference to FIG. 14A to FIG. 14E. FIG. 14A is a view that shows an example of the search condition input screen 600.

The search condition input screen 600 is a screen for allowing the user to input a search condition. The search condition input screen 600 is displayed on the display unit 54 by the shop search unit 551 of the mobile terminal 5 on the basis of the display data stored in the terminal storage unit 52. The search condition input screen 600 includes a keyword input section 601, selecting sections 602a to 602c, "SEARCH ON THIS CONDITION" icon 603, and the like.

The keyword input section 601 is an input section for inputting a keyword for so-called keyword search. That is, when the user inputs arbitrary text to the keyword input section 601, the search condition is allowed to be specified such that shops including the text in the keyword of the shop information table (FIG. 6) are extracted as search results. Any mode, such as perfect match search, partial match search, prefix search and suffix search, may be used as a search mode.

The selecting section 602a allows the user to select a specific place as a search condition. When the selecting section 602a is selected, predetermined addresses and station names are provided by a drop-down menu, or the like. When the user selects a specific address or station name from among them, a search condition is specified such that shops including the address or station name in the shop information table are extracted as search results.

Similarly, the selecting section 602b allows the user to select a specific shop category as a search condition. The shop category may be synonymous with the shop category as an item included in the shop information table (see FIG. 6). The selecting section 602c allows the user to select a specific persistence or coupon as a search condition. The above-described items of the selecting sections are examples. Other than these items, an arbitrary item, such as average budget, vacant seat situation, business hours and menu, may be set.

When the "SEARCH ON THIS CONDITION" icon 603 is selected, the shop search unit 551 of the mobile terminal 5 transmits a search request based on the search conditions specified by the keyword input section 601, the selecting sections 602b to 602c, or the like, to the shop information distribution server 2 via the terminal communication unit 51.

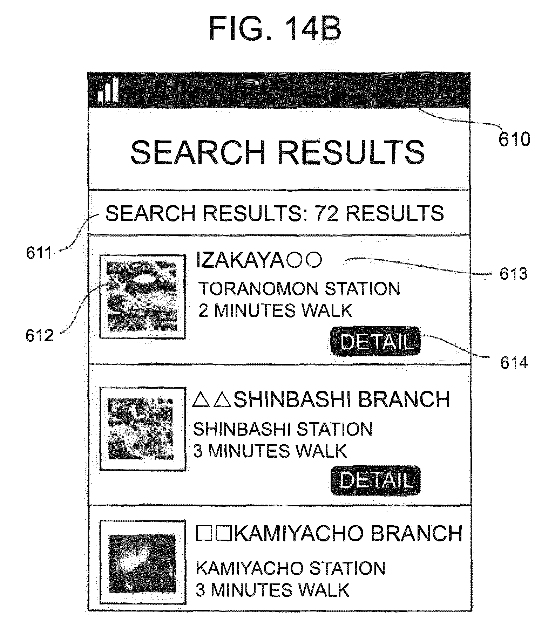

FIG. 14B is a view that shows an example of the search result screen 610.

The search result screen 610 is a screen that shows a list of shops that coincide with the search conditions. The search result screen 610 is displayed on the display unit 54 by the shop search unit 551 of the mobile terminal 5 on the basis of search result data that are generated by the shop information distribution server 2. The search result screen 610 includes a search result number section 611, an image 612, a shop name and area information 613, "DETAIL" icon 614, and the like.

The search result number section 611 shows the number of shops included in the search results. The image 612 is the photo of a food provided as an example. However, the image 612 may be the photo of an in-store scene, shop exterior, employee, or the like. The shop name and area information 613 shows a shop name and a simple shop location. When the "DETAIL" icon 614 is selected, the shop page screen 620 (described later) is displayed.

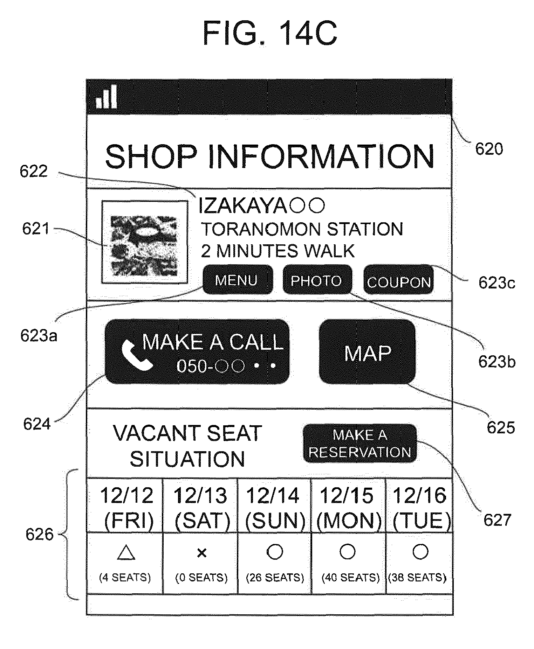

FIG. 14C is a view that shows an example of the shop page screen 620.

The shop page screen 620 is a screen that shows the detailed information about a specific shop. The shop page screen 620 is displayed on the display unit 54 by the shop search unit 551 of the mobile terminal 5 on the basis of shop page data that are generated by the shop information distribution server 2. The shop page screen 620 includes an image 621, a shop name and area information 622, a "MENU" icon 623a, a "PHOTO" icon 623b, a "COUPON" icon 623c, and the like. The shop page screen 620 further includes a "MAKE A CALL" icon 624, a "MAP" icon 625, a vacant seat situation 626, a "MAKE A RESERVATION" icon 627, and the like.

The image 621 is the photo of a food provided as an example. However, the image 621 may be the photo of an in-store scene, shop exterior, employee, or the like. The shop name and area information 622 shows a shop name and a simple shop location. When the "MENU" icon 623a is selected, the screen shifts into a screen that displays the menu of a shop. When the "PHOTO" icon 623b is selected, the screen shifts into a screen that shows the photo of a food, in-store scene, shop exterior, or the like. When the "COUPON" icon 623c is selected, the screen shifts into a screen that shows a discount, a campaign, or the like, offered by the shop.

When the "MAKE A CALL" icon 624 is selected, a request to make a call to a shop is transmitted to the call forwarding server 3. When the "MAKE A CALL" icon 624 is selected, the call screen 630 (described later) is displayed. When the "MAP" icon 625 is selected, the location of a shop on a map is displayed.

The vacant seat situation 626 displays the number of non-reserved available seats for, for example, recent five days date by date. In response to the number of available seats, the cross symbol indicates that no seats are available, the triangle symbol indicates that a few seats are available or the circle symbol indicates that plenty of seats are available is displayed together with the number of available seats. When the "MAKE A RESERVATION" icon 627 is selected, the screen shifts into a screen for applying for reservation of a seat, or the like.

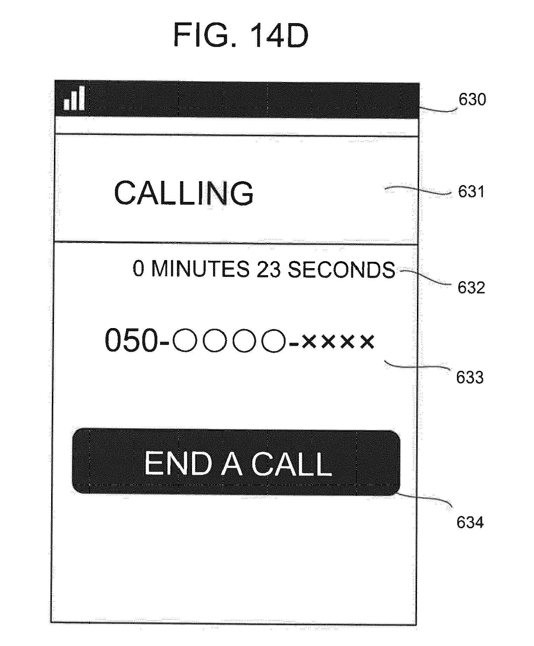

FIG. 14D is a view that shows an example of the call screen 630.

The call screen 630 is a screen that shows the status of a call between a user and a shop, or the like. The call screen 630 is displayed on the display unit 54 by the call unit 552 of the mobile terminal 5 on the basis of the display data stored in the terminal storage unit 52. The call screen 630 includes a status 631, a duration of a call 632, a destination 633, an "END A CALL" icon 634, and the like.

The status 631 shows the status of a call. Characters, such as "DURING A CALL" and "CALLING", are displayed in the status 631 depending on the status of a call. The duration of a call 632 shows the duration of a call (an elapsed time from when a destination answers a call). For example, the phone number or individual ID of a destination shop is displayed in the destination 633. When the "END A CALL" icon 634 is selected, the call unit 552 of the mobile terminal 5 transmits session end notification to the call forwarding server 3 via the terminal communication unit 51.

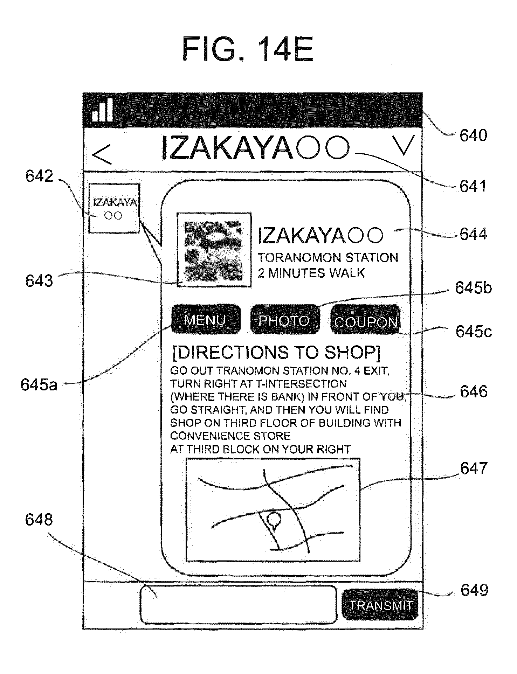

FIG. 14E is a view that shows an example of the reminding information screen 640.

The reminding information screen 640 is displayed on the display unit 54 by, for example, the chat unit 553 of the mobile terminal 5 on the basis of reminding information data that are generated by the shop information distribution server 2. For example, a shop name 641, a shop icon 642, an image 643, shop name and area information 644, a "MENU" icon 645a, a "PHOTO" icon 645b, a "COUPON" icon 645c, and the like, are displayed on the reminding information screen 640. For example, directions to a shop 646, a map 647, and the like, are displayed on the reminding information screen 640. Other than the above, information, such as the phone number, address and business hours of a shop, may be included in the reminding information screen 640. Other than the above, arbitrary information regarding a shop, such as a vacant seat situation for each time period, a shortcut icon to a reservation page and the URL of a shop homepage, may be included in the reminding information screen 640.

Even when the user has forgotten information about a shop to which the user has made a call, the user remembers the information by viewing the reminding information screen. That is, when the user has forgotten directions to a shop, the user is allowed to view directions to the shop by consulting the directions to a shop 646 and the map 647.

In the above-described example, the reminding information screen 640 is a screen that is displayed by the chat unit 553, that is, a screen that is displayed on a chat application that is executed by the chat unit 553. However, depending on the type of reminding information data, the reminding information screen may be displayed on a mail application that is executed by the mail unit 554 or may be displayed on an SMS application that is executed by the SMS unit 555.

### Second Embodiment

In the second embodiment, the fact that a predetermined keyword has been detected in a phone conversation between a user and a shop is further added as the distribution condition for reminding information. Hereinafter, the description of similar points to those of the first embodiment is omitted where appropriate.

FIG. 15 is a view that shows an example of the schematic configuration of a call forwarding server 3'.

The call forwarding server 3' includes a server communication unit 31', a server storage unit 32' and a server processing unit 33'. The server processing unit 33' includes not only a calling processing unit 331', a call forwarding processing unit 332' and a call function processing unit 333' but also a voice detection unit 334'. These units are functional modules that are implemented by programs that are executed by the one or more processors of the server processing unit 33'. Alternatively, these units may be implemented in the call forwarding server 3' as firmware.

The voice detection unit 334' monitors a phone conversation between the mobile terminal 5 and the shop telephone 6, and detects the speech of a predetermined keyword during the call. When the voice detection unit 334' has detected the speech of the predetermined keyword, the voice detection unit 334' transmits detection notification to the shop information distribution server 2. In this way, the voice detection unit 334' transmits detection notification to the shop information distribution server 2 as a result of the fact that a keyword related to user's reservation of a shop has been detected in a phone conversation between the user and the shop.

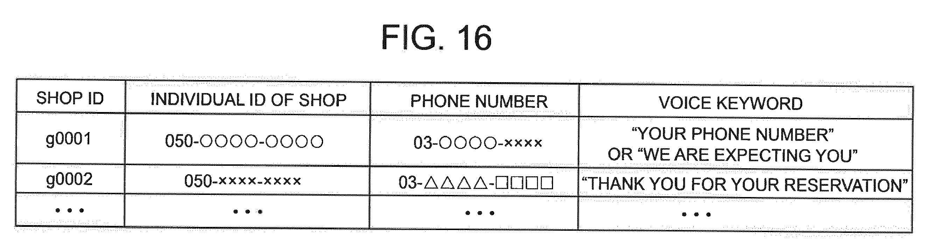

FIG. 16 is a view that shows an example of the data structure of a call forwarding table.

In the call forwarding table according to the second embodiment, the item of a voice keyword set for each shop is included. When the voice keyword has been detected during a call between the user and a shop, reminding information is distributed. The voice keyword is allowed to be arbitrarily set by, for example, accessing to the call forwarding server 3' of the information providing system 1 via the Internet 83 with the use of the shop terminal 7.

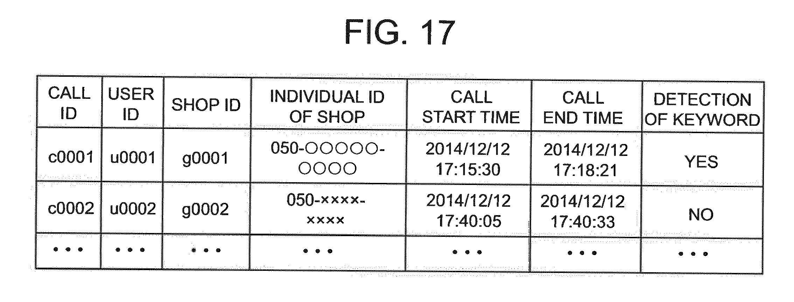

FIG. 17 is a view that shows an example of the data structure of a call history table.

In the call history table according to the second embodiment, whether a voice keyword has been detected during a call is recorded. For example, in FIG. 17, when "detection of keyword" is "yes" as in the case of the call c0001, a voice keyword has been detected during the call. On the contrary, when "detection of keyword" is "no" as in the case of the call c0002, no voice keyword has been detected during the call.

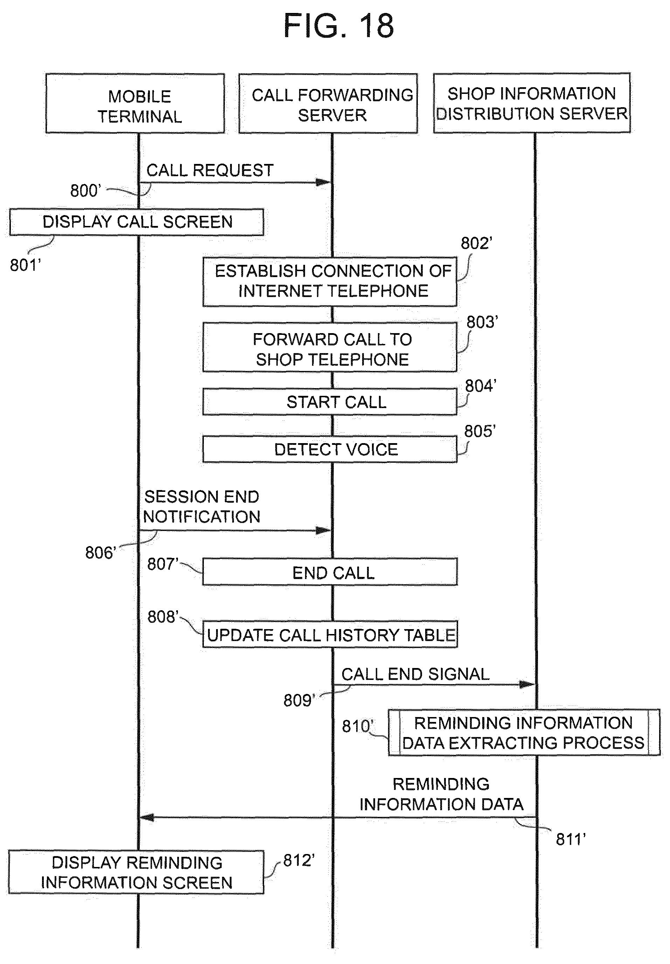

FIG. 18 is a view that shows an example of the flow of a process regarding a call and distribution of reminding information.

When the user chooses to make a call to a shop on a shop page displayed on the display unit 54, the call unit 552 of the mobile terminal 5 transmits a call request including the user ID, the shop ID, and the like, to the call forwarding server 3' (step S800'). Subsequently, the call unit 552 displays a call screen on the display unit 54 (step S801').

When the call request has been received via the server communication unit 31', the calling processing unit 331' of the call forwarding server 3' extracts the individual ID of the call destination shop by consulting the call forwarding table, and establishes connection of internet telephone between the mobile terminal 5 and the call forwarding server 3' (step S802'). Subsequently, the call forwarding processing unit 332' of the call forwarding server 3' extracts the call number of the shop from the call forwarding table, and establishes a telephone line between the mobile terminal 5 and the shop telephone 6 by forwarding internet telephone to the phone number of the shop (step S803').

When the telephone line has been established, a call is started between the mobile terminal 5 and the shop telephone 6 (step S804'). When the call has been started, the voice detection unit 334' detects the voice of the call (step S805'). The detection of the voice is constantly performed during the call.

When the user chooses to end the call on the call screen, the call unit 552 of the mobile terminal 5 transmits session end notification to the call forwarding server 3' (step S806'). There is a case where the shop telephone 6 transmits session end notification to the call forwarding server 3'. In this case, step S806' is not executed.

When the session end notification has been received via the server communication unit 31', the call function processing unit 333' executes the process of ending a call (step S807'). When the call has been ended, the call function processing unit 333' updates the call history table stored in the server storage unit 32', and records various pieces of information regarding the call (step S808').

Subsequently, the call function processing unit 333' transmits a call end signal including the user ID as source information, the shop ID as destination information, whether a keyword has been detected, and the like, to the shop information distribution server 2 (step S809'). When the call end signal has been received via the server communication unit 21, the reminding management unit 232 of the shop information distribution server 2 executes reminding information data extracting process (step S810'). The reminding information data extracting process will be described later.

When the reminding information data extracting process has ended, the reminding information distribution unit 232B of the shop information distribution server 2 transmits reminding information data to the mobile terminal 5 via the server communication unit 21 (step S811').

When the reminding information data have been received via the terminal communication unit 51, the chat unit 553 of the mobile terminal 5 displays the reminding information screen on the display unit 54 on the basis of the received reminding information data (step S812').

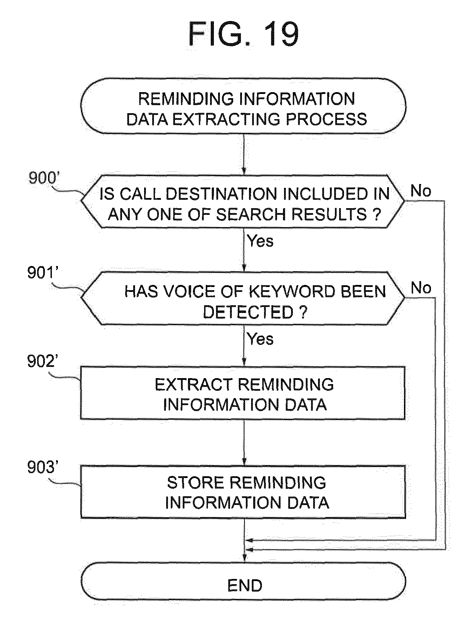

FIG. 19 is a view that shows an example of the flow of the reminding information data extracting process.

When the reminding information data extracting process starts, the distribution processing unit 232A of the shop information distribution server 2 executes the following determination process (step S900'). That is, the distribution processing unit 232A extracts search IDs regarding searches on which matching process is not complete and which include the same user ID as the source user ID included in the call end signal received in step S809' by consulting the search history table. Subsequently, the distribution processing unit 232A determines whether the destination shop ID included in the call end signal received in step S809' is included in any one of the search results regarding the extracted search IDs.

When the destination shop ID included in the call end signal received in step S809' is included in none of the search results of the extracted search IDs (N in step S900'), the reminding information data extracting process ends. On the other hand, when the destination shop ID included in the call end signal received in step S809' is included in any one of the search results of the extracted search IDs (Y in step S900'), the process proceeds to step S901'.

When detection of a keyword included in the call end signal received in step S809' is "no" in step S901' (N in step S901'), the reminding information data extracting process ends. On the other hand, when detection of a keyword included in the call end signal received in step S809' is "yes" (Y in step S901'), the process proceeds to step S902'.

In step S902', the distribution processing unit 232A extracts the reminding information data of the shop regarding the shop ID by consulting the shop information table stored in the shop information database 4 via the server communication unit 21 (step S902').

When the reminding information data have been received via the server communication unit 21, the distribution processing unit 232A of the shop information distribution server 2 stores the reminding information data in the server storage unit 22 (step S903'). Thus, the reminding information data extracting process ends.

In the second embodiment, detecting a predetermined keyword in a phone conversation between a user and a shop is further added as the distribution condition for reminding information. Therefore, reminding information is distributed depending on the details of a call, so it is possible to improve the accuracy of user's necessity of reminding information.

### Third Embodiment

In the first embodiment, a source and a destination are identified on the basis of a user ID and a shop ID; whereas, in the third embodiment, a source and a destination are identified on the basis of the phone number of a user and the internet telephone number of a shop (the individual ID of a shop). Hereinafter, the description of similar points to those of the first embodiment is omitted where appropriate. That is, step S800', step S802', step S803', step S805' and step S900' will be described below. The other steps are similar to those of the first embodiment, so the description is omitted.

The call unit 552 of the mobile terminal 5 transmits a call request, including the phone number of the user as a source and the internet telephone number of the shop as a destination, to the call forwarding server 3 (step S800').

When the call request has been received via the server communication unit 31, the calling processing unit 331 of the call forwarding server 3 establishes connection of internet telephone between the mobile terminal 5 and the call forwarding server 3 by the use of the internet telephone number of the shop (step S802'). Subsequently, the call forwarding processing unit 332 of the call forwarding server 3 extracts the call number of the shop from the call forwarding table, and establishes a telephone line between the mobile terminal 5 and the shop telephone 6 by forwarding internet telephone to the phone number of the shop (step S803').

When the call has been started, the call function processing unit 333 transmits a call start signal, including the phone number as source information, phone number as destination information, and the like, to the shop information distribution server 2 (step S805').

The distribution processing unit 232A identifies the user ID corresponding to the phone number as source information by consulting the user information table. The distribution processing unit 232A identifies the shop ID corresponding to the phone number as destination information by consulting the call forwarding table. The distribution processing unit 232A extracts search IDs regarding searches on which matching process is not complete and which include the same user ID as the source user ID included in the call start signal received in step S805' and corresponding to the source phone number by consulting the search history table. Subsequently, the distribution processing unit 232A determines whether the destination shop ID included in the call start signal received in step S805' and corresponding to the destination internet telephone number is included in any one of the search results regarding the extracted search IDs (step S900').

In the third embodiment, it is possible to distribute reminding information even when a call is started by inputting the internet telephone number of a shop with the use of the default call unit of the mobile terminal.

### Other Embodiments

In the first embodiment, the information providing system 1 is formed of the call forwarding server 3, the shop information distribution server 2, the shop information database 4 and the router 85 such that the call forwarding server 3, the shop information distribution server 2, the shop information database 4 and the router 85 are communicable with one another. Instead, a shop information database may be provided outside the information providing system 1 so as to be communicable via the Internet. Thus, it is possible to extract shop data from an external tie-up shop information database.

In the first embodiment, the distribution condition for reminding information may be whether a communication destination is included in any one of search results. However, the fact that the shop information distribution server 2 receives a call history from the call forwarding server 3 and the distribution processing unit 232A detects a call history longer than or equal to a minimum duration of a call of a destination shop by consulting the distribution condition table may be further added as the distribution condition for reminding information. Thus, it is possible to prevent distribution of reminding information when the line is cleared without a phone conversation or in the case of a wrong number that the duration of a call is short.

In the first embodiment, the distribution condition for reminding information may be whether a communication destination is included in any one of search results. Instead, the distribution condition for reminding information may be whether a communication destination is included in a browsing history.

In the first embodiment, the distribution condition for reminding information may be whether a communication destination is included in any one of search results. However, the distribution condition for reminding information may further include the fact that a selected category (see FIG. 4) regarding the user ID of a user who has made a search coincides with a shop category (see FIG. 6) of a communication destination shop. The fact that a selected category coincides with a shop category means that at least one of elements included in the selected category coincides with any one of elements included in the shop category.

For example, the shop information distribution server 2 may change the items and layout of the reminding information screen depending on the details of a browsing history by consulting the browsing history table. That is, for example, information that is not browsed by the user may be preferentially included in the reminding information screen by displaying items, not included in the items of the browsing information type of the browsing history table, on the reminding information screen. With this configuration, the reminding information screen includes information that fits the taste and interest of the user.

A computer program for causing a computer to implement the functions of the server processing unit 23, server processing unit 33 and terminal processing unit 55 may be provided in form such that the computer program is recorded in a computer readable recording medium, such as a magnetic recording medium and an optical recording medium.

Persons skilled in the art are able to variously change, replace or modify the embodiments without departing from the spirit and scope of the invention, and it should be understood that the embodiments may be combined as needed.

## Claims

1. An information providing system (1) connectable with a user terminal (5), the information providing system **characterized by** comprising:
a receiving unit (231A) that receives user identification information and a search condition from the user terminal;
an acquisition unit (232A) that acquires search target identification information related to a search target found on the basis of the search condition;
a storage unit (22) that stores the search target identification information in association with the user identification information;
a communication unit (3, 3') that connects the user terminal with a required communication destination (6) on the basis of a communication request from the user terminal; and
a transmission unit (232B) that, when the required communication destination coincides with the search target identification information associated with the user identification information of the user terminal, transmits, to the user terminal, information about the search target corresponding to the search target identification information.

2. The information providing system according to claim 1, wherein
the communication unit connects the user terminal with the required communication destination so as to be communicable by voice.

3. The information providing system according to claim 2, wherein
when a duration of communication between the user terminal and the required communication destination is longer than a predetermined time, the transmission unit transmits, to the user terminal, the information about the search target corresponding to the search target identification information.

4. The information providing system according to claim 2, wherein
the communication unit includes a communication analyzing unit (334') that analyzes details of communication between the user terminal and the required communication destination, and
the transmission unit transmits, to the user terminal, the information about the search target corresponding to the search target identification information depending on the details of communication, analyzed by the communication analyzing unit.

5. The information providing system according to any one of claims 1 to 4, wherein
the user terminal includes a display unit (54) that displays a search result on the search target found on the basis of the search condition, and
the communication unit connects the user terminal with the required communication destination only when a user has performed a predetermined operation on the search result displayed by the display unit.

6. The information providing system according to any one of claims 1 to 5, wherein
the storage unit stores a user selected category in association with the user identification information and stores a search target category in association with the search target identification information, and
when the user selected category coincides with the search target category, the transmission unit transmits, to the user terminal, the information about the search target corresponding to the search target identification information.

7. The information providing system according to claim 6, wherein
the search target is a shop, and
the search target category is restaurant.

8. The information providing system according to any one of claims 1 to 7, wherein
the transmission unit transmits, to the user terminal, the information about the search target corresponding to the search target identification information with the use of an SMS, an e-mail or a chat application.

9. The information providing system according to any one of claims 1 to 8, wherein
the information about the search target corresponding to the search target identification information includes at least one of a name, image, phone number, address, business hours, directions and map information of the search target.

10. The information providing system according to claim 9, wherein
the information about the search target corresponding to the search target identification information further includes at least one of a vacant seat situation for each day, a vacant seat situation for each time period, a shortcut to a reservation page of the search target and a URL of a homepage of the search target.

11. The information providing system according to any one of claims 1 to 10, wherein
when the required communication destination is included in a user's browsing history, the transmission unit transmits, to the user terminal, the information about the search target corresponding to the search target identification information.

12. The information providing system according to any one of claims 1 to 11, further comprising:
an information processing unit (2) that changes distribution items and layout of the information about the search target corresponding to the search target identification information, wherein the information processing unit changes the items and layout depending on details of a user's browsing history by consulting the browsing history.

13. The information providing system according to claim 12, wherein
the information processing unit preferentially incorporates information, which is not browsed by the user, into the distribution items of the information about the search target corresponding to the search target identification information.
